Europäisches Patentamt

European Patent Office

Office européen des brevets

(11) Numéro de publication : **0 502 789 A1**

# (12) DEMANDE DE BREVET EUROPEEN

(21) Numéro de dépôt : **92400579.6**

(51) Int. Cl.⁵ : **A01D 45/26**

(22) Date de dépôt : **06.03.92**

(30) Priorité : **06.03.91 FR 9102653**

(43) Date de publication de la demande :
**09.09.92 Bulletin 92/37**

(84) Etats contractants désignés :
**DE ES FR GB IT NL**

(71) Demandeur : **CENTRE D'ETUDES ET DE STRATEGIES INDUSTRIELLES**
**B.P. 14 - Z.I. du Combal**
**F-12300 Decazeville (FR)**

(72) Inventeur : **Moncet, Jacques**
**Mas de Pataral**
**F-46270 Bagnac-sur-Celle (FR)**

(74) Mandataire : **Serin, Jean-Pierre**
**Cabinet PIERRE LOYER 77, rue Boissière**
**F-75116 Paris (FR)**

(54) **Machine pour la récolte des brocolis.**

(57) La présente invention propose une machine pour la récolte des brocolis, caractérisée en ce qu'elle comporte des dispositifs permettant de réaliser :
— une canalisation des pieds de brocolis dans l'ouverture de la machine (10),
— au moins deux coupes (13, 23), l'une pour séparer le pied du sol et l'autre pour le couper à la hauteur requise,
— deux effeuillages,
— au moins un calibrage (26) qui sera de préférence précédé d'un précalibrage,
— une sélection des pommes ayant un diamètre requis pour la commercialisation.

FIG.4

EP 0 502 789 A1

La présente invention concerne la récolte des brocolis.

Le brocoli est un légume qui connaît depuis quelques temps une forte progression de la demande et est même destiné à remplacer en grande partie le chou-fleur car il se conserve beaucoup mieux que celui-ci.

Le brocoli se présente sous la forme d'une plante haute d'environ 0,7 à 0,8 mètre, au sommet de laquelle se trouve la pomme comestible entourée d'une végétation très importante. Les feuilles de brocolis sont assez grandes et disposées sensiblement verticalement autour de la tige jusqu'à environ 10 centimètres au dessus de la pomme si bien qu'elles la cachent souvent totalement. Cette pomme est généralement située à une distance du sol variant entre 0,5 et 0,7 mètre. Les brocolis sont cultivés à raison de 25 000 à 30 000 pieds par hectare.

Actuellement, la récolte des brocolis se fait manuellement tandis que sa culture et sa préparation à la vente se font de manière mécanisée. Ceci freine le développement du brocoli car il reste un légume cher du fait de la main d'oeuvre nécessaire à sa récolte.

La présente invention a pour but de proposer une machine pour la récolte des brocolis.

Une telle machine sera très vite rentable puisqu'une personne récolte 80 à 110 kg de brocoli par heure alors que l'on peut estimer qu'une machine tirée par un tracteur avançant à 2 km/h récoltera 4 500 pieds par heure soit environ 1 575 kg. Elle aura un intérêt supplémentaire du fait que la pousse du brocoli est très sensible à la température, ce qui nécessite de le cueillir très rapidement dès sa maturité car il n'est sinon très vite plus commercialisable.

La commercialisation du brocoli se fait sous la forme de pommes ayant 14 cm de hauteur et un diamètre compris entre 11 et 21 cm, lesdites pommes doivent de plus être totalement dégagées des feuilles qui les entourent sur le pied.

Pour ce faire, la présente invention propose un procédé de récolte des brocolis caractérisé en ce qu'il comporte les étapes suivantes :
– on canalise les pieds de brocolis de façon à les présenter alignés pour les étapes suivantes :
– on coupe la tige du brocoli à une hauteur déterminée au dessous de la pomme,
– on procède à un effeuillage du pied récolté,
– on procède à un calibrage en hauteur de la pomme du brocoli,
– on coupe la tige au dessous de la pomme,
– on effectue un dernier calibrage en diamètre pour sélectionner les pommes à stocker et éliminer celles de diamètre trop faible ou trop fort.

L'invention propose également une machine pour la récolte des brocolis comportant des moyens pour canaliser les pieds de brocolis dans l'ouverture de la machine, des premiers moyens de coupe pour séparer le pied du sol et des seconds moyens de coupe pour le couper à la hauteur requise, des moyens d'effeuillage, au moins un moyen de calibrage et des moyens de sélection des pommes ayant le diamètre requis pour la commercialisation.

Selon une réalisation préférentielle de l'invention, elle comporte des moyens pour canaliser les pieds de brocolis à récolter vers l'entrée de la machine, des premiers moyens de coupe pour séparer le brocoli de son pied, des premiers moyens d'entraînement en translation des brocolis, des moyens d'effeuillage pour séparer les feuilles de la tige, des moyens de calibrage en hauteur des pommes de brocolis, des seconds moyens de coupe de la pomme et, des seconds moyens d'entraînement en translation.

Selon une caractéristique avantageuse de l'invention, l'entraînement en translation des pieds de brocolis dans la machine est assuré par deux ensembles de deux courroies d'entraînement chacun, circulant dans le plan horizontal. L'entraînement des courroies se fait à une vitesse un peu supérieure à la vitesse d'avancement du tracteur entraînant la machine.

Selon l'invention, les pieds de brocolis sont canalisés par des guides évasés vers l'extérieur qui s'étendent largement en avant de la machine vers le passage compris entre les courroies (avaloir).

Les moyens d'effeuillage sont constitués par une soufflante, qui envoie de l'air avec assez de force pour rabattre les feuilles vers le bas, et des tiges assurant le maintien des feuilles rabattues pendant la coupe.

Selon une autre forme de réalisation, les moyens d'effeuillage sont constitués par deux roues à rayons qui fouettent tangentiellement lesdits pieds pour casser les tiges des feuilles. Les roues sont constituées de plusieurs rayons en caoutchouc ou toute autre matière et la position de leurs axes de rotation est réglable afin que les extrémités des rayons affleurent le pied de brocoli.

Selon une autre réalisation de l'invention, les moyens d'effeuillage sont constitués par deux tiges métalliques qui s'écartent l'une de l'autre dans le sens d'avancement des pieds de brocoli, lesdites tiges étant positionnées très près du pied du brocoli pour s'insérer entre ledit pied et les feuilles restantes puis écarter les feuilles du pied.

Les moyens de calibrage et/ou de précalibrage des brocolis sont constitués d'une courroie pouvant présenter un brin incliné par rapport aux courroies d'entraînement, afin qu'au cours de leur déplacement les pommes des brocolis soient, par leur appui contre la courroie, rapprochées peu à peu des courroies et positionnées avec leur sommet à une hauteur déterminée des courroies.

Selon une forme de réalisation, les moyens de calibrage des pommes en hauteur sont constitués, en même temps que les moyens d'effeuillage, par un dispositif se présentant sous la forme d'une grande roue comportant sur sa périphérie une pluralité d'ouvertures uniformément réparties autour desquelles est disposée une grille qui présente aussi des ouvertures en correspondance. Lesdites ouvertures ont un diamètre tel que les pommes de brocoli puissent passer à travers et la roue tourne tandis que les courroies entraînent les brocolis afin que chaque tête de brocoli soit positionnée dans une ouverture de la grille et de la roue puis soumise à un effort vers le bas assurant son positionnement en hauteur par rapport aux courroies tandis que la grille appuie sur les feuilles entourant la pomme afin de les écarter.

Les moyens de sélection en diamètre sont constitués par les courroies d'entraînement qui s'écartent peu à peu l'une de l'autre à mesure qu'elles avancent au dessus d'un convoyeur destiné à l'évacuation des pommes de brocoli vers un récipient de stockage. Le récipient de stockage est formé d'une paroi se terminant à son extrémité inférieure par un retour en direction de l'axe à l'intérieur de laquelle se déplace un fond.

La présente invention sera mieux comprise à la lecture de la description qui va suivre en référence au dessin sur lequel :

– la figure 1 est une vue schématique de dessus d'un tracteur équipé d'une machine selon l'invention,

– la figure 2 est une vue de côté d'une première forme de réalisation de la machine selon l'invention,

– la figure 3 est une vue de dessus de la machine de la figure 2,

– les figures 4 et 5 sont des vues semblables à la figure 2 pour deux autres formes de réalisation de la machine,

– la figure 6 représente un dispositif d'effeuillage de la tige de brocoli,

– les figures 7a et 7b représentent un récipient de stockage des brocolis coupés et sélectionnés dans des configurations à vide et plein.

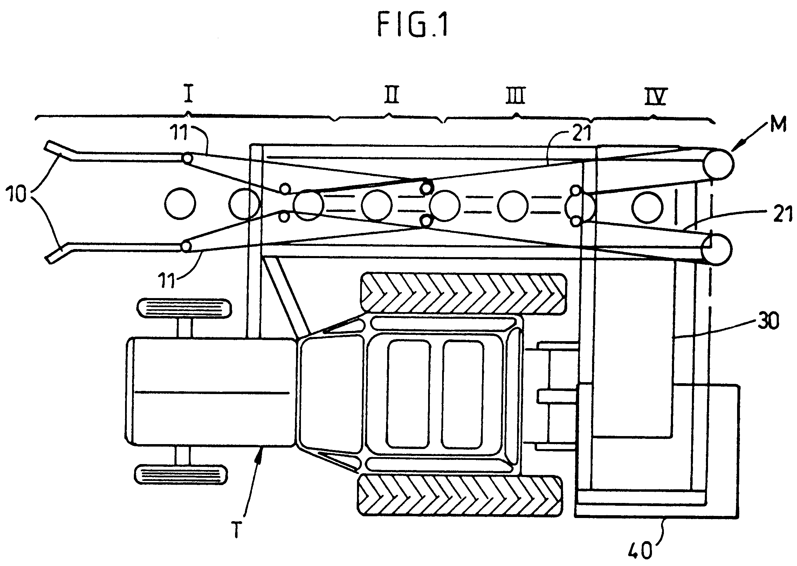

On a représenté à la figure 1, une machine M selon l'invention montée sur un tracteur T. Comme on peut le voir, cette machine est prévue globalement en forme de L afin de s'étendre sur le côté et à l'arrière du tracteur.

Le traitement des brocolis, c'est-à-dire la coupe et l'effeuillage, est exécuté dans la partie de la machine se trouvant le long du tracteur afin que le chauffeur puisse surveiller le fonctionnement de la machine sans avoir à se retourner ou à quitter son poste de conduite. La partie de la machine s'étendant à l'arrière du tracteur sert à l'évacuation des pommes de brocoli coupées et calibrées vers un moyen de stockage.

La récolte des brocolis sur la machine se fait globalement en quatre étapes successives :

– à l'étape I, les pieds de brocolis sont canalisés à l'entrée de la machine puis sont coupés et subissent un premier effeuillage, (suppression de feuilles issues de la tige au dessous de la coupe),

– à l'étape II, l'on procède à un précalibrage du brocoli et à un second effeuillage,

– à l'étape III, le brocoli est définitivement calibré c'est-à-dire mis en position afin d'être coupé à une hauteur de 14 cm, il est de nouveau effeuillé afin d'ôter toutes les feuilles entourant la pomme puis coupé,

– à l'étape IV on effectue une sélection des pommes afin de ne conserver que les pommes d'un diamètre compris entre 11 et 21 cm, et on les stocke.

Certaines de ces étapes pourront se passer en partie dans le même temps, le traitement des brocolis au moment de leur récolte nécessitant, pour être convenablement accompli en vue de la commercialisation, au moins deux coupes, l'une pour séparer le pied du sol et l'autre pour le couper à la hauteur requise, deux effeuillages, et au moins un calibrage qui sera de préférence précédé d'un précalibrage afin d'être plus précis.

A la suite de ce traitement, les brocolis retenus sont évacués à l'étape IV vers le récipient de stockage 40 dépendant de la machine ou porté par une remorque.

La canalisation des pieds de brocolis est rendue nécessaire par le fait que les brocolis ne poussent pas en lignes parfaites et que de plus ils ne sont pas toujours verticaux. Elle est effectuée par la mise en place, à l'avant de la machine, de guides 10 évasés vers l'extérieur qui s'étendent largement vers l'avant de la machine.

A la suite de ces guides 10, la machine comporte un premier ensemble de deux courroies d'entraînement 11 circulant dans leur plan horizontal ou légèrement incliné vers l'arrière, entre lesquelles les pieds de brocolis sont serrés et entraînés en translation après avoir été coupés afin d'être séparés du sol. On prévoit un entraînement des courroies à une vitesse légèrement supérieure à la vitesse d'avancement du tracteur afin de ne pas risquer de bourrage à l'entrée de la machine.

Les brocolis séparés du sol sont alors entraînés par les courroies 11 en direction d'un second ensemble de courroies d'entraînement 21 entre lesquelles ils sont pincés afin de subir les différentes étapes du procédé et d'arriver à l'étape de sélection.

La sélection est faite, après effeuillage complet et coupe sous la pomme, en prévoyant une disposition telle que les courroies s'écartent peu à peu l'une de l'autre lorsqu'elles croisent le tapis roulant 30 destiné à l'évacuation des pommes de brocoli vers le récipient de stockage 40. Cet écartement varie de 11 à 21 cm dans la zone au cours de laquelle lesdites courroies sont au dessus du tapis 30. Ainsi, les pommes ayant un diamètre inférieur à 11 cm ne seront plus maintenues par les courroies et tomberont à côté du tapis roulant 30 avant d'être arrivées au dessus de celui-ci. Les pommes ayant un diamètre requis, c'est-à-dire compris entre 11 et 21 cm, tomberont quant à elles sur le tapis 30 et seront alors acheminées vers le récipient de stockage 40.

Enfin, les pommes de brocoli ayant un diamètre supérieur à 21 cm, et étant donc impropres à la commercialisation, tomberont des courroies au-delà du tapis 30.

Après avoir décrit de manière globale le fonctionnement de la machine selon l'invention, nous allons maintenant décrire de manière plus détaillée différentes formes de réalisation de celle-ci.

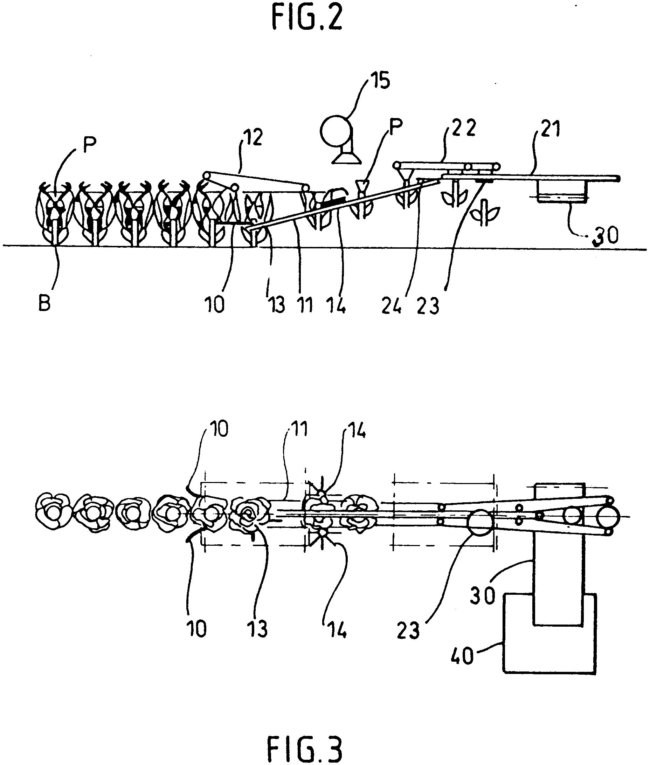

Sur les figures 2 et 3, on a schématisé les pieds de brocolis B afin de montrer la disposition du feuillage autour des pommes P.

Dans la forme de réalisation de la machine représentée sur ces figures, les brocolis sont canalisés par les guides 10 vers le passage compris entre les courroies 11 et coupés, afin que les tiges soient séparées du sol, par un disque de coupe 13 situé sous lesdites courroies 11.

De préférence, les courroies utilisées sont crantées sur leur deux faces afin de pouvoir à la fois être entraînées et assurer l'entraînement des pieds de brocolis.

Les courroies 11 sont, comme on le voit sur là-figure 2, disposées de manière à élever les pieds de brocolis au fur et à mesure qu'ils se déplacent en direction de l'arrière de la machine. Ceci permet d'éviter, après la coupe, que les brocolis ne heurtent les pieds de ceux coupés avant.

Une courroie 12, circulant dans le plan vertical, s'étend au dessus desdites courroies 11 afin qu'au cours de leur montée les pommes des brocolis soient, par leur appui contre le brin horizontal de la courroie 12, rapprochées peu à peu des courroies 11, ceci est rendu possible par le fait que les courroies sont souples ce qui leur permet de s'écarter pour faciliter le glissement vers le bas des pieds de brocoli. On réalise ainsi un précalibrage des pommes en les positionnant toutes avec leur sommet à une distance déterminée au dessus des courroies 11. Ce précalibrage est rendu nécessaire par le fait que les pieds de brocolis ne sont pas tous de même hauteur.

Lorsque les pieds de brocoli sortent de dessous la courroie de précalibrage 12, ils sont soumis à l'action d'une soufflante 15 qui envoie de l'air avec assez de force pour rabattre les feuilles vers le bas et ainsi dégager les pommes P.

Pendant que les feuilles sont rabattues, on procède à un premier effeuillage des pieds par la mise en oeuvre de deux roues à rayons 14 qui fouettent tangentiellement lesdits pieds pour casser les tiges des feuilles. Ces roues sont, comme visible à la figure 3, constituées de plusieurs rayons en caoutchouc ou toute autre matière souple et la position de leurs axes de rotation est réglable afin que les extrémités des rayons affleurent le pied de brocoli et qu'ainsi celui-ci ne soit pas blessé par lesdits rayons.

Lorsque les pieds arrivent à l'extrémité arrière des courroies 11, ils sont soumis à un nouveau calibrage par la mise en oeuvre d'une courroie circulant dans le plan vertical 22 puis repris par un ensemble de courroies circulant dans le plan horizontal 21.

Un dispositif d'effeuillage 24 est prévu en amont de cette dernière courroie afin de séparer les dernières feuilles pouvant encore rester juste au dessous de la pomme.

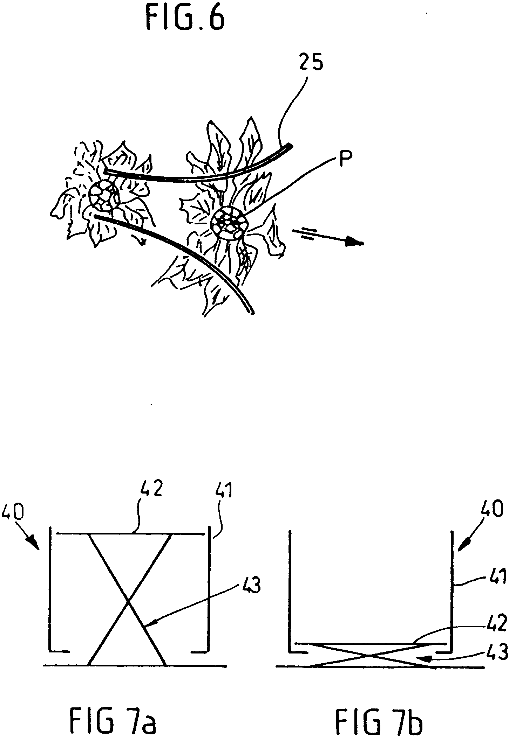

Ce dispositif pourra être du genre de celui représenté à la figure 6, c'est-à-dire formé de deux tiges métalliques 25 qui s'écartent l'une de l'autre dans le sens d'avancement des pieds de brocoli. Par une telle disposition, en réglant leur écartement à l'amont afin qu'elles soient très proches du pied du brocoli, les tiges 25 s'insèrent entre ledit pied et les feuilles restantes, puis à mesure que le brocoli est entraîné par les courroies 21, les tiges écartent les feuilles du pied.

Entre-temps, la pomme est parfaitement positionnée avec sa face supérieure à 14 cm au dessus d'un disque de coupe 23. Elle est alors coupée par ce disque, le reste de la tige et les feuilles tombant au dessous.

Il ne reste plus qu'à faire traverser à cette pomme le dispositif de sélection précédemment décrit, et éventuellement l'éliminer ou l'évacuer par le tapis roulant 30 vers le récipient de stockage 40 si son diamètre est convenable.

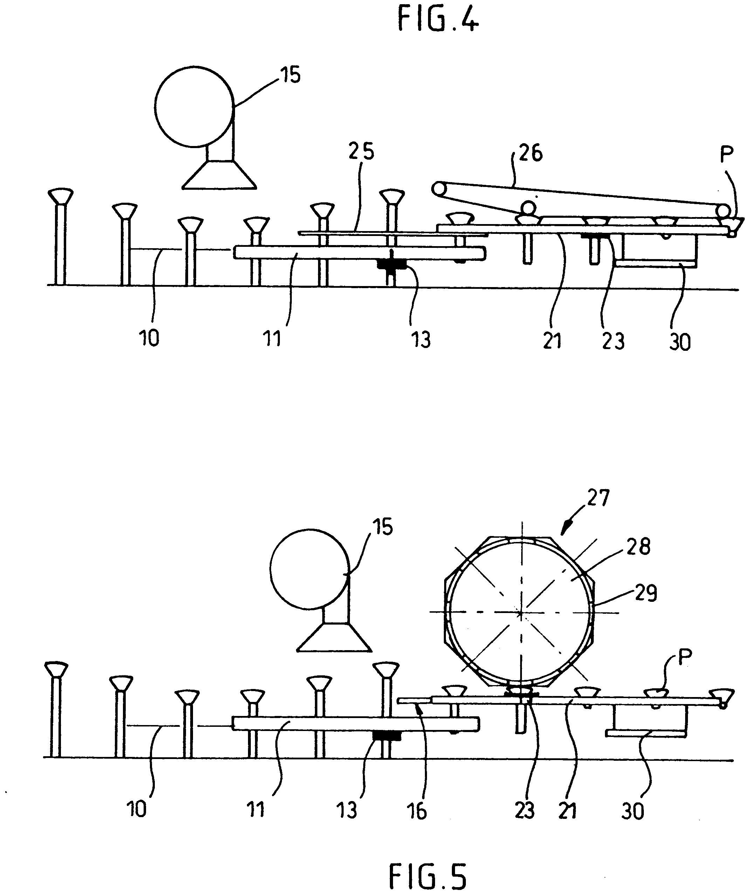

La machine représentée à la figure 4 diffère par certaines dispositions relatives des différents moyens.

Dans cette forme de réalisation, la soufflante 15 est disposée au dessus des tiges 10 assurant la canalisation des pieds de manière à ce que, les feuilles étant rabattues, une grande partie de celles-ci passe en dessous des courroies 11 et ne soient ainsi plus disposées autour de la pomme. Les pieds de brocoli passent entre les tiges du dispositif d'effeuillage 25, qui est semblable à celui représenté à la figure 6, et les feuilles rabattues par la soufflante passent sous lesdites tiges. La tige est coupée par le disque 13 et le pied est pris entre les courroies 21.

Au cours de leur entraînement par les courroies 21, les pommes sont soumises à un calibrage en hauteur par la mise en oeuvre de la courroie 26. Cette courroie 26 présente un brin disposé en oblique par rapport au trajet et un second brin disposé horizontalement par rapport audit trajet. Ces deux brins de la courroie 26 assurent alors le précalibrage et le calibrage définitif des pommes qui sont coupées par le disque 23 avant de traverser le dispositif de sélection semblable à celui qui a déjà été décrit plus haut.

Nous allons décrire maintenant la forme de réalisation d'une machine selon l'invention représentée à la figure 5.

Dans cette réalisation, le premier effeuillage est réalisé par l'action conjuguée de la soufflante 15 située au dessus des courroies 11 et de deux tiges 16 assurant le maintien des feuilles rabattues avant la prise des pieds par les courroies 21. La coupe des pieds est assurée par un disque 13 situé en amont desdites tiges 16 de maintien des feuilles. Le calibrage des pommes en hauteur est assuré en même temps que le deuxième effeuillage par le dispositif 27.

Ce dispositif 27 se présente sous la forme d'une grande roue comportant sur sa périphérie une pluralité d'ouvertures 28 uniformément réparties autour desquelles est disposé une grille 29 présentant elle aussi des ouvertures en correspondance.

Lesdites ouvertures ont un diamètre tel que les pommes de brocoli puissent passer à travers.

La roue 27 tourne tandis que les courroies entraînent les brocolis afin que chaque tête de brocoli soit positionnée dans une ouverture de la grille et de la roue. Ainsi, la pomme de brocoli est soumise à un effort vers le bas assurant son positionnement en hauteur par rapport aux courroies 21 tandis que la grille appuie sur les feuilles entourant la pomme afin de les écarter. La pomme est alors coupée par le disque 23 puis acheminée vers le dispositif de sélection.

Comme on l'aura compris les différentes étapes de calibrage et d'effeuillage sont nécessaires afin de permettre l'obtention de pommes de brocoli parfaitement calibrées et débarrassées de leurs feuilles dans le récipient de stockage.

On ne sortirait bien entendu pas du cadre de la présente invention en proposant une machine pour la récolte des brocolis dont les différentes étapes se font dans un ordre différent.

De manière préférée, afin de ne pas abîmer les pommes de brocoli lorsqu'elles arrivent dans le récipient de stockage, celui-ci sera prévu avec un fond mobile comme représenté à la figure 7.

Ce récipient 40 est tel que représenté formé d'une paroi 41 se terminant à son extrémité inférieure par un retour en direction de l'axe à l'intérieur de laquelle se déplace un fond 42.

Le fond 42 est de dimensions telles qu'il peut coulisser dans l'espace délimité par ladite paroi 41 en étant monté sur des moyens 43 de hauteur variable.

Ainsi, comme on le voit sur la figure 7a, lorsque le récipient 40 est vide, le fond 42 de celui-ci est disposé près de l'extrémité supérieure de la paroi 41. Cela permet de ne pas faire tomber les brocolis d'une grande hauteur ce qui les détérioreraient. Au fur et à mesure de l'arrivée des brocolis en provenance du tapis 30, ceux-ci s'entassent sur le fond 42 qui descend alors peu à peu en fonction de la charge si bien que les brocolis ne tombent jamais d'une grande hauteur.

Les moyens 43 de hauteur variable peuvent encore être déplacés vers le bas par tout moyen mécanique par exemple asservi à la vitesse de rotation des roues de la remorque portant le récipient de stockage.

On pourra bien entendu prévoir plusieurs récipients de stockage 40 montés en carrousel sur la remorque.

Enfin, les courroies 11 peuvent être remplacées par des chaines munies de taquets afin d'assurer l'entraînement des brocolis.

**Revendications**

1. - Procédé de récolte des brocolis caractérisé en ce qu'il comporte les étapes suivantes :
    – on canalise les pieds de brocolis de façon à les présenter alignés pour les étapes suivantes :
    – on coupe la tige du brocoli à une hauteur déterminée au dessous de la pomme,
    – on procède à un effeuillage du pied récolté,
    – on procède à un calibrage en hauteur de la pomme du brocoli,
    – on coupe la tige au dessous de la pomme,
    – on effectue un dernier calibrage en diamètre pour sélectionner les pommes à stocker et éliminer celles de diamètre trop faible ou trop fort.

2 - Machine pour la récolte des brocolis, caractérisée en ce qu'elle comporte :
    – des moyens (10) pour canaliser les pieds de brocolis dans l'ouverture de la machine,
    – des premiers moyens de coupe, pour séparer le pied du sol et des seconds moyens de coupe pour le couper à la hauteur requise,
    – des moyens d'effeuillage,
    – au moins un moyen de calibrage,
    – des moyens de sélection des pommes ayant le diamètre requis pour la commercialisation.

3. - Machine à récolter les brocolis selon la revendication 2, caractérisé par le fait qu'elle comporte :
    – des moyens (10) pour canaliser les pieds de brocolis à récolter vers l'entrée de la machine,
    – des premiers moyens de coupe (13) pour séparer le brocoli de son pied,
    – des premiers moyens d'entraînement en translation des brocolis (11),
    – des moyens d'effeuillage (14, 15, 16) pour écarter et/ou séparer les feuilles de la tige,
    – des moyens de calibrage en hauteur (26, 27) des pommes de brocolis,
    – des seconds moyens de coupe (23) de la pomme et,
    – des seconds moyens d'entraînement en translation (21).

4 - Machine selon la revendication 3, caractérisée en ce que l'entraînement en translation des pieds de brocolis dans la machine est assuré par un premier ensemble (11) et un second ensemble (21) de deux courroies d'entraînement circulant dans le plan horizontal.

5. - Machine selon la revendication 3, caractérisée en ce que l'entraînement en translation des pieds de brocolis dans la machine est assuré par un ensemble (11) de deux chaines munies de taquets et un ensemble (21) de deux courroies d'entraînement circulant dans le plan horizontal.

**6** - Machine selon l'une quelconque des revendications 2 à 5, caractérisée en ce que l'entraînement des moyens d'entraînement (11, 21) se fait à une vitesse un peu supérieure à la vitesse d'avancement du tracteur entraînant la machine.

**7** - Machine selon l'une quelconque des revendications 2 et 3, caractérisée en ce que les pieds de brocolis sont canalisés par des guides (10) évasés vers l'extérieur qui s'étendent largement en avant de la machine vers le passage compris entre les courroies ou les chaines constituant les premiers moyens d'entraînement (11).

**8** - Machine selon l'une quelconque des revendications 2 et 3, caractérisée en ce que les moyens d'effeuillage sont constitués par une soufflante (15), qui envoie de l'air avec assez de force pour rabattre les feuilles vers le bas, et des tiges (16) assurant le maintien des feuilles rabattues pendant la coupe.

**9** - Machine selon l'une quelconque des revendications 2 et 3, caractérisée en ce que les moyens d'effeuillage sont constitués par deux roues à rayons (14) qui fouettent tangentiellement lesdits pieds pour casser les tiges des feuilles.

**10** - Machine selon la revendication 9, caractérisée en ce que les roues (14) sont constituées de plusieurs rayons en caoutchouc ou toute autre matière et en ce que la position de leurs axes de rotation est réglable afin que les extrémités des rayons affleurent le pied de brocoli.

**11** - Machine selon l'une quelconque des revendications 2 et 3, caractérisée en ce que les moyens d'effeuillage sont constitués par deux tiges métalliques (25) qui s'écartent l'une de l'autre dans le sens d'avancement des pieds de brocoli, lesdites tiges étant positionnées très près du pied du brocoli pour s'insérer entre ledit pied et les feuilles restantes puis écarter les feuilles du pied.

**12.** - Machine selon l'une quelconque des revendications 2 à 11, caractérisée en ce que les moyens de calibrage et/ou de précalibrage des brocolis sont constitués d'une courroie (12, 22, 26) pouvant présenter un brin incliné par rapport aux moyens d'entraînement (11,21), afin qu'au cours de leur déplacement les pommes des brocolis soient par leur appui contre la courroie (12, 22, 26) rapprochées peu à peu des courroies (11, 21) et positionnées avec leur sommet à une hauteur déterminée des moyens d'entraînement (11, 21).

**13** - Machine selon l'une quelconque des revendications 2 à 11, caractérisée en ce que les moyens de calibrage des pommes en hauteur sont constitués, en même temps que les moyens d'effeuillage, par un dispositif (27) se présentant sous la forme d'une grande roue comportant sur sa périphérie une pluralité d'ouvertures (28) uniformément réparties autour desquelles est disposé une grille (29) qui présente aussi des ouvertures en correspondance.

**14** - Machine selon la revendication 13, caractérisée en ce que lesdites ouvertures ont un diamètre tel que les pommes de brocoli puissent passer à travers et en ce que la roue (27) tourne tandis que les courroies (21) entraînent les brocolis afin que chaque tête de brocoli soit positionnée dans une ouverture de la grille et de la roue puis soumise à un effort vers le bas assurant son positionnement en hauteur par rapport aux courroies (21) tandis que la grille appuie sur les feuilles entourant la pomme afin de les écarter.

**15** - Machine selon l'une quelconque des revendications 2 à 14, caractérisée en ce que les moyens de sélection en diamètre sont constitués par les courroies d'entraînement (21) qui s'écartent peu à peu l'une de l'autre à mesure qu'elles avancent au dessus d'un convoyeur (30) destiné à l'évacuation des pommes de brocoli vers un récipient de stockage (40).

**16** - Machine selon la revendication 14, caractérisée en ce que le récipient de stockage (40) est formé d'une paroi (41) se terminant à son extrémité inférieure par un retour en direction de l'axe à l'intérieur de laquelle se déplace un fond (42).

FIG.1

EP 0 502 789 A1

# FIG.2

# FIG.3

# FIG.4

# FIG.5

FIG.6

25

P

FIG 7a

42 41

40

43

FIG 7b

40

41

42

43

EP 0 502 789 A1

**Office européen des brevets**

# RAPPORT DE RECHERCHE EUROPEENNE

Numero de la demande

EP 92 40 0579
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 094 238 (STRIPLIN)<br>* colonne 1, ligne 64 – colonne 2, ligne 49; figures 1-5 * | 1-3,7,12 | A01D45/26 |
| A | | 4-6 | |
| Y | US-A-3 690 049 (ROBERSON)<br>* colonne 2, ligne 15 – colonne 5, ligne 44; figures 1-17 * | 1-3,7,12 | |
| A | | 4,5,8,9 | |
| A | US-A-3 821 987 (SHEPARDSON ET AL.)<br>* colonne 2, ligne 46 – colonne 5, ligne 21; figures 1-8 * | 1-5 | |
| A | US-A-3 164 182 (HUGHES ET AL.)<br>* colonne 2, ligne 58 – colonne 3, ligne 71; figures 1-3,13 * | 1,2,15 | |
| A | GB-A-1 401 632 (BLEINROTH)<br>* page 2, ligne 128 – page 3, ligne 63; figures 1-3 * | 1,2,7,12 | |
| A | FR-A-2 628 933 (CHAMBRE D'AGRICULTURE DE MAINE-ET-LOIRE)<br>* page 5, ligne 4 – page 6, ligne 8; figures 1,2 * | 6 | **DOMAINES TECHNIQUES RECHERCHES (Int. Cl.5)**<br><br>A01D<br>A23N |
| A | US-A-3 485 023 (SEE)<br>* colonne 1, ligne 63 – colonne 3, ligne 45; figures 1-5 * | 7,8 | |
| A | SOVIET PATENTS ABSTRACTS<br>Section PQ,<br>Derwent Publications Ltd., London, GB;<br>Class P12, AN 82-A2011J<br>& SU-A-897 153 (CHUVASH AGRIC INST) 15 Janvier 1982<br>* abrégé * | 8 | |

-/--

Le présent rapport a été établi pour toutes les revendications

| Lieu de la recherche | Date d'achèvement de la recherche | Examinateur |
|---|---|---|
| LA HAYE | 30 JUIN 1992 | WILLIAMS M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

11

Office européen
des brevets

**RAPPORT DE RECHERCHE EUROPEENNE**

Numero de la demande

EP    92 40 0579
Page 2

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 352 690 (BLEINROTH) <br> * page 4, dernier alinéa  - page 6, alinéa 1; figures 1-4 * | 8 | |
| A | US-A-3 731 477 (COON) <br> * colonne 3, ligne 66 - colonne 5, ligne 47; figures 1-9 * | 7,15 | |
| A | US-A-3 415 045 (HIBBARD) | | |

**DOCUMENTS CONSIDERES COMME PERTINENTS**

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 30 JUIN 1992 | WILLIAMS M.J. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons

& : membre de la même famille, document correspondant

EPO FORM 1503 03.82 (P0402)